# EUROPEAN PATENT APPLICATION

(11) **EP 2 368 695 A2**
(43) Date of publication of application: **28.09.2011**
(21) Application number: 11158618.6
(22) Date of filing: 17.03.2011
(51) Int. Cl.: B29C 65/34, G01K 11/12, F16L 47/03, B29L 23/00

(54) **Electrofusion fitting**

(30) Priority: 22.03.2010 US 316229 P; 08.07.2010 US 362470 P
(71) Applicant: Georg Fischer Sloane LLC, Little Rock, AR 72206 (US)
(72) Inventor: Mastro, Paul F., Little Rock, AR Arkansas 72223 (US)
(74) Representative: De Colle, Piergiacomo

(57) **Abstract**

The invention involves an electrofusion pipe fitting. The fitting has a body having a pipe-receiving aperture. An electric heating element surrounds the aperture. The fitting has a thermochromic indicator at an axial end.

## Description

### CROSS-REFERENCE TO RELATED APPLICATIONS

Benefit is claimed of U.S. Provisional Patent Application Serial No. 61/316,229, Filed March 22, 2010, U.S. Provisional Patent Application Serial No. 61/362,470, Filed July 8, 2010, and U.S. Patent Application Serial No. 13/035,271, Filed February 25, 2011, entitled "Electrofusion Fitting", the disclosures of which are incorporated by reference herein as if set forth at length.

### BACKGROUND OF THE INVENTION

The invention relates to piping. More particularly, the invention relates to pipe electrofusion.

### SUMMARY OF THE INVENTION

One aspect of the invention involves an electrofusion pipe fitting. The fitting has a body having a pipe-receiving aperture. An electric heating element surrounds the aperture. The fitting has a thermochromic indicator at an axial end.

In various implementations, the thermochromic indicator may be thermally communicated with terminal portions of the electric heating element. The fitting may be a collar for coupling first and second members.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is an outboard end (front) view of an electrofusion collar.

FIG. 2 is a top (connector side) view of the collar of FIG. 1.

FIG. 3 is a longitudinal sectional view of the collar of FIG. 2.

FIG. 3A is an enlarged view of a connector area of the collar of FIG. 3.

Like reference numbers and designations in the various drawings indicate like elements.

### DETAILED DESCRIPTION

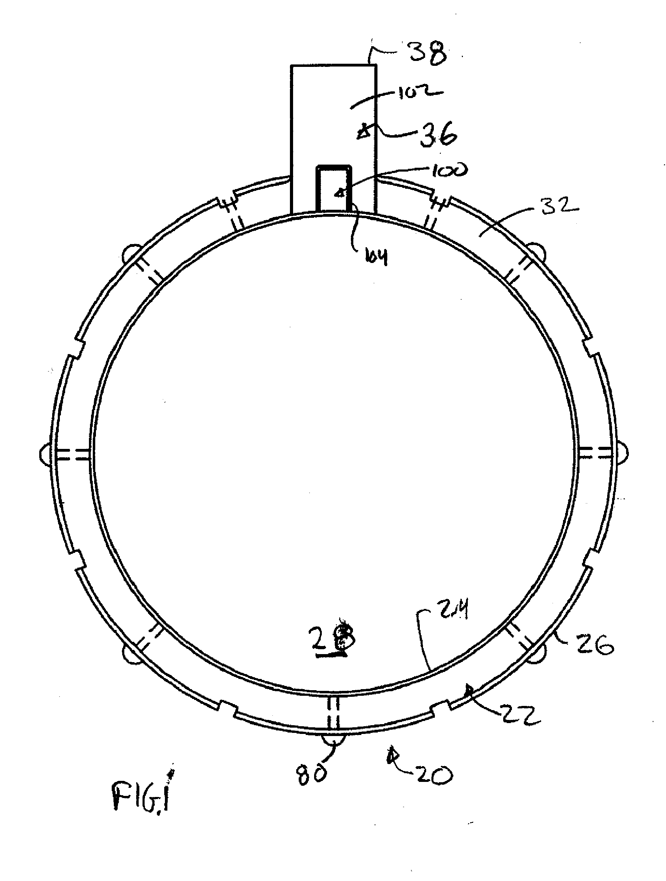

FIG. 1 shows an electrofusion collar 20. The exemplary collar 20 is based on one existing collar, the FUSEAL three-inch electrofusion collar of GF Piping Systems, Tustin, California. The collar 20 comprises a molded plastic body (e.g., polypropylene) 22 having an inboard (radially) surface 24 and an outboard (radially) surface 26. The inboard surface 24 surrounds a central aperture 28. The body 22 has a first longitudinal/axial end 34 (axially outboard in an installed condition) and a second axial/longitudinal end 34. An electrofusion connector boss/tab 36 protrudes radially to an outboard (radially) end 38.

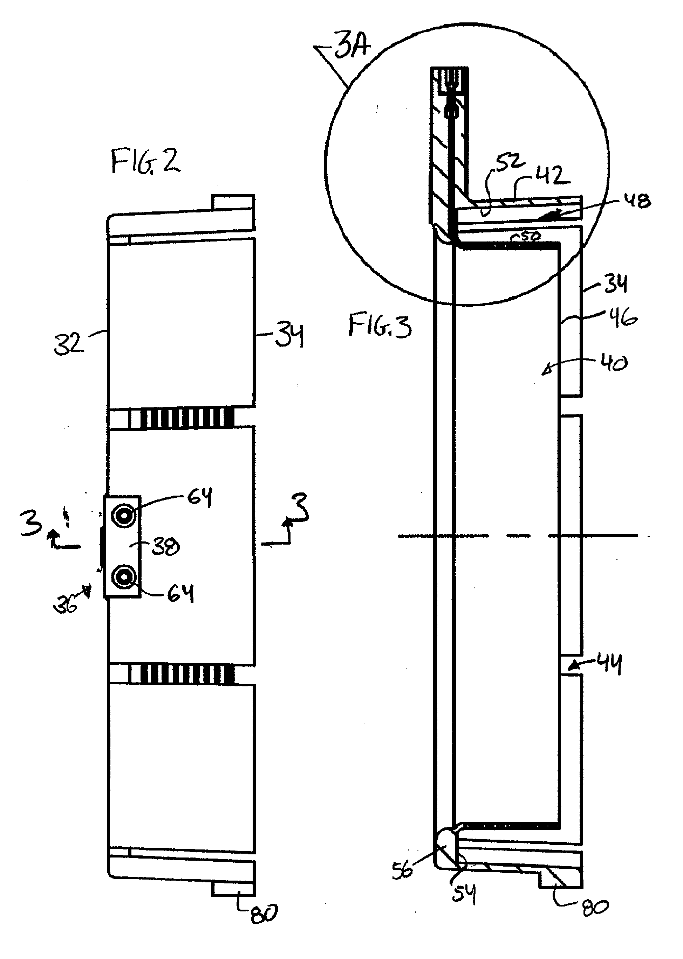

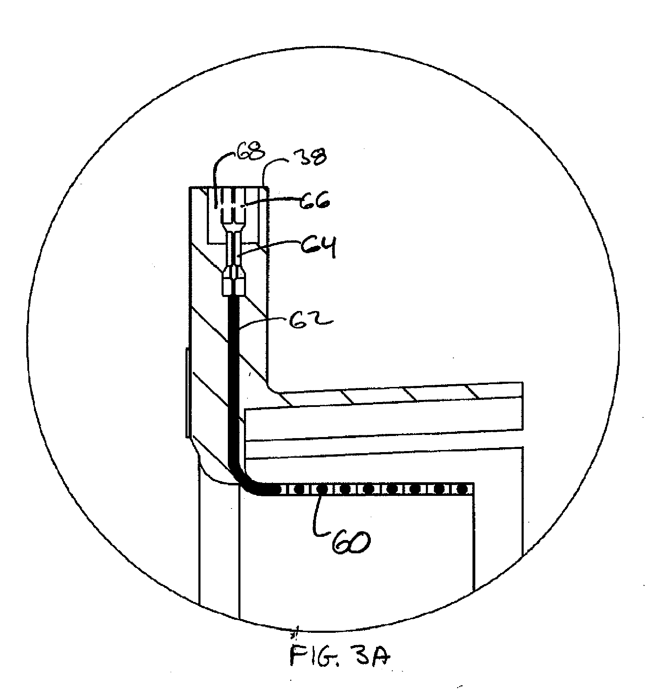

FIG. 3 shows the body as including an inner wall 40 and an outer wall 42. The outer wall 42 extends to the end 34 which forms a rim. The exemplary outer wall 42 is segmented by axial slots 44. The inner wall 40 extends to a rim/end 46 which is recessed from the rim/end 34. An annular channel 48 lies between an outboard (radially) surface 50 of the inner wall 40 and an inboard surface 52 of the outer wall 42 and extends to a base 54 which forms an inboard wall of an end ring/flange 56 of the body. The inner wall 40 contains a wire coil 60 (FIG. 3A). Terminal portions 62 of the wire extend into the boss 36 to respective contacts 64. Exemplary contacts 64 are formed as pins and have end portions 66 within respective compartments 68 of the boss open to the surface 38. The contacts mate with associated contacts of a connector of an electrofusion power source (not shown) to energize the coil.

In operation, the collar is used to secure respective first and second mating members. An exemplary first member is a fitting having an annular end portion which is inserted into the channel 48. A clamp (not shown) may be placed around the outer wall 42 and closed, contracting the slots 44 and compressing the outer wall into engagement with the associated first member. The clamp may be positioned via ribs 80 (FIGS. 1&2). The second member may be a pipe having an end portion inserted within the aperture 28 (e.g., before the clamp tightening). After clamping, the power source may be connected to the tab/boss and the coil energized. Energizing of the coil heats the coil, melting the inner wall and adjacent portions of the first and second members to form a fusion joint.

As so far described, the collar and its operation may correspond to the exemplary prior art collar and process. However, other variations are possible.

It is desirable to verify that sufficient heating has occurred to form an effective fusion joint. To provide an indication of such sufficient heating, a thermochromic indicator 100 is provided on the body. The exemplary thermochromic indicator is provided along the outboard face 102 of the tab/boss 36. In an exemplary sequence of manufacture, the coil is prefabricated (wound from wire and contacts attached). The coil is then inserted into a molding tool and the body is molded thereover. The coil may be pre-encapsulated in material which forms the inner wall or the inner wall may be formed during a single molding process with the rest of the body. Exemplary molding of the body forms a low wall 104 along the face 102. The wall 104 bounds a pad portion of the surface 102 to which the thermochromic indicator may be applied (e.g., as a liquid in a brushing or spraying operation). The liquid may then dry (through evaporation which may be fan/hot air-assisted) or cure to harden.

The composition of the thermochromic indicator is selected in view of its proximity to the coil so that it changes color at a temperature where sufficient fusion has taken place. In particular, the location along the face 102 may provide a beneficial combination of visibility and proximity to the terminal legs of the conductor (which allows heat transfer from the terminal legs to the indicator). The exemplary location has the indicator coating starting within 4.0mm of the interface of the pipe entering the fitting (e.g., 2.0-4.0mm).The particular temperature of the indicator at which the indicator changes color will be appropriate to the plastic materials being fused. For example for a typical George Fischer Fuseal polypropylene fitting, an exemplary temperature is 60+/-1C. For a polypropylene schedule 80 fusion system an exemplary temperature is 65+/-1C and for a PVDF system an exemplary temperature is 71+/-1C. Even a much lower temperature threshold allows the indicator to provide an indication that a joint has been energized (e.g., not missed by the technician who uses the electrofusion power source; although not then indicating quality of fusion).

The exemplary color change is permanent/irreversible. An exemplary indicator comprises a cholesteric thermochromic liquid crystal base (e.g., forming in excess of 50% by weight of the coating wet). An exemplary such base material is commercially available from LCR Hallcrest, LLC as Chromax. Such a base material tends to be very unstable when subjected to UV light and will change color over time with exposure. This would be disadvantageous because of a desire to store the finished product for some time and a desire to be able to install the product outside where it would be exposed to sunlight. To increase stability, a UV absorber may be added. An exemplary absorber is titanium dioxide (TiO₂) which may be compounded into the coating to serve as a UV stabilizer and viscosity modifier (e.g., at least 2% of the coating by weight wet). Because the commercial thermochromic coatings have some variability to their UV stability, with each batch, one may make up a series of samples at different loadings and choose the lowest amount that works with the particular batch. Additionally, adding the TiO₂ increases the viscosity of the coating, making it easier to apply and also shortening the drying time. Exemplary TiO₂ is available as TiONA® from Millenium Inorganic Chemicals, Ltd./Cristal Global.

In addition to the TiO₂ or other absorber, a hindered amine light stabilizer (HALS) may be used. An exemplary HALS is Lowinox® CPL Phenolic Antioxidant from Chemtura Corporation (e.g., at least 6% of the coating by weight wet). In the post heated condition the thermochromic indicator will turn (from the initial white) an intense red or black color in the area nearest to the highest fusion temperature and may turn gray or pink as the distance from this location increases. The presence of the red or black area (or other color if a different indicator is used) will indicate the fusion.

A specific example involves, by weight: 85% Chromax Magenta K60; 5% TiONA RCL4 (RMS 1049); and 10% Lowinox CPL 50D UV. A nominal broader specification would be 83-87% such base material, 3-6% such TiO₂ material, and 8-12% such HALS by weight wet.

One or more embodiments of the present invention have been described. Nevertheless, it will be understood that various modifications may be made without departing from the spirit and scope of the invention. For example, different particular end uses (e.g., materials, pipe sizes, and purposes) may influence particular implementations. Furthermore, when implemented as a redesign of an existing electrofusion component, details of the existing component may influence details of any particular implementation. Accordingly, other embodiments are within the scope of the following claims.

## Claims

1. An electrofusion pipe fitting component comprising:
a body having a pipe-receiving aperture;
an electric heating element surrounding the aperture; and
a thermochromic indicator at an axial end of the component.

2. The fitting of claim 1 wherein:
the body is formed of a fusion collar.

3. The fitting of claim 1 wherein:
the body is formed of a molded non-metallic material.

4. The fitting of claim 1 wherein:
the heating element comprises a coil at least partially embedded in the body.

5. The fitting of claim 1 wherein:
the thermochromic indicator is a thermochromic liquid crystal based coating.

6. The fitting of claim 5 wherein:
the thermochromic liquid crystal comprises a cholesteric thermochromic liquid crystal material.

7. The fitting of claim 5 wherein:
the thermochromic liquid crystal comprises TiO₂.

8. The fitting of claim 5 wherein:
the thermochromic liquid crystal comprises hindered amine light stabilizer.

9. The fitting of claim 1 wherein:
the thermochromic indicator is positioned on a connector tab.

10. The fitting of claim 1 wherein:
the thermochromic indicator is configured to change color at a temperature of 59-72C.

11. A method for manufacturing the fitting of claim 1, the method comprising:
molding the body over the heating element; and
applying the thermochromic indicator to the body.

12. The method of claim 11 wherein:
the applying comprises applying in a fluid form.

13. A method for forming a joint between a pipe fitting and a connected member, the method comprising:
inserting an insertion portion of the connected member into an aperture of a body of the fitting;
energizing a heating element of the fitting so as to:
electrofuse the body of the fitting to the insertion portion; and
change color of a thermochromic indicator at an axial end of the fitting.

14. The method of claim 13 wherein:
the mating member is a pipe and the insertion portion is an end portion of the pipe or a spigot portion of a second fitting.

15. The method of claim 13 further comprising:
applying the thermochromic indicator to the fitting.

16. A piping system joint comprising:
a first member;
a second member fused to the first member;
an electric heating element at least partially embedded within the first member and/or second member; and
a thermochromic indicator at an axial end of one of the first member and the second member and in a color-changed post-heating condition.
